# FASCICULE DE BREVET EUROPEEN

(11) **EP 1 852 281 B1**
(45) Date de publication et mention de la délivrance du brevet: **03.12.2008**
(21) Numéro de dépôt: 07107007.2
(22) Date de dépôt: 26.04.2007
(51) Int. Cl.: B60C 25/00

(54) **Methode d'extraction d'un boudin mousse et outillage**
Verfahren zur Förderung eines Schaumstoffstrangs und Werkzeugausstattung
Method of extracting a foam insert and tools

(30) Priorité: 05.05.2006 FR 0604167
(43) Date de publication de la demande: 07.11.2007
(73) Titulaire: Société de Technologie Michelin, 63000 Clermont-Ferrand (FR); Michelin Recherche et Technique S.A., 1763 Granges-Paccot (CH)
(72) Inventeur: Azam, Jean-Jacques, 63100, Clermont-Ferrand (FR)
(74) Mandataire: Lasson, Cédric Y. M.

(56) Documents cités:
- EP-A- 1 354 730
- WO-A-95/33628
- FR-A1- 2 319 503
- US-A- 1 759 681

## Description

L'invention concerne les ensembles de roulage aptes à rouler à pression réduite et destinés à équiper les véhicules automobiles. Ces ensembles comportent une jante dotée d'une valve, un pneumatique, et enferment un boudin de forme approximativement toroïdale.

Ce boudin, plus communément dénommé boudin mousse, est généralement réalisé en caoutchouc alvéolaire à cellules fermées. Il est destiné à supporter la charge en cas de perte de pression du pneumatique. Les alvéoles peuvent, dans certains cas, contenir un gaz sous pression.

Plus particulièrement l'invention s'intéresse aux opérations d'assemblage et de désassemblage d'un ensemble contenant un boudin mousse.

A cet effet des procédés et des machines de montage aptes à insérer le boudin mousse dans le pneumatique ont été développées sur la base des machines et des procédés connus et utilisés pour introduire les chambres de cuisson dans un pneumatique et tels que décrit, à titre d'exemple, dans le brevet US 1 759 681 ou encore telle qu'illustrée à la figure 1

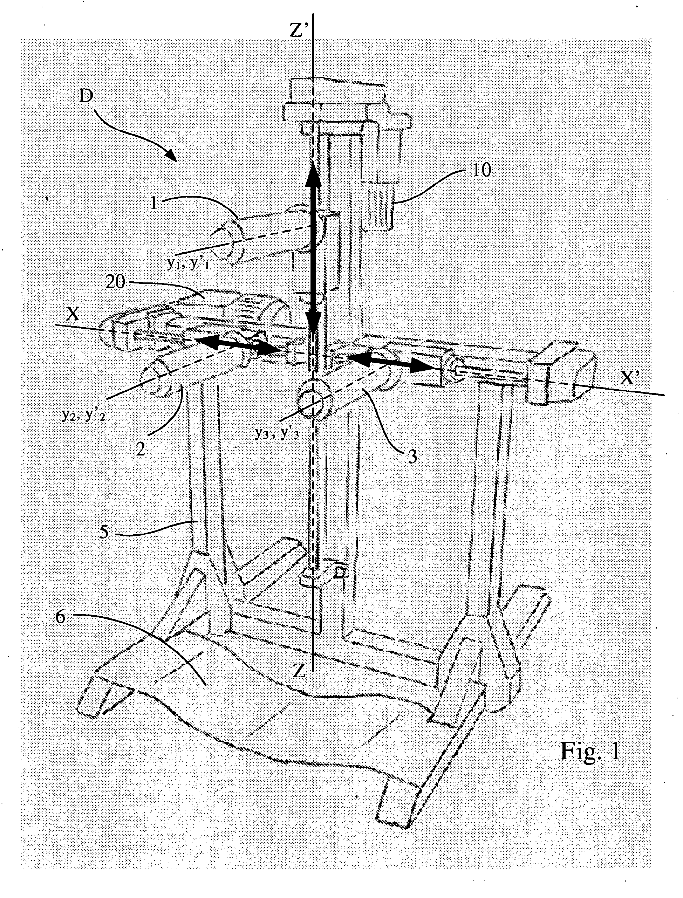

Ces machines comprennent un châssis 5 sur lequel sont montée des rouleaux 1, 2 et 3, libres en rotations autour de leurs axes respectifs y₁ y'₁, y₂ y'₂, y₃ y'₃, les axes y₁ y'₁, y₂ y'₂, y₃ y'₃ étant parallèles entre eux. Un premier rouleau 1 est apte à se déplacer sur un axe ZZ', et les deux autres rouleaux se déplacent, symétriquement par rapport à l'axe ZZ', selon un axe XX' perpendiculaire à l'axe ZZ'. La machine de montage selon l'art antérieur connu illustrée à la figure 1, a son axe ZZ' disposé verticalement et son axe XX' disposé horizontalement.

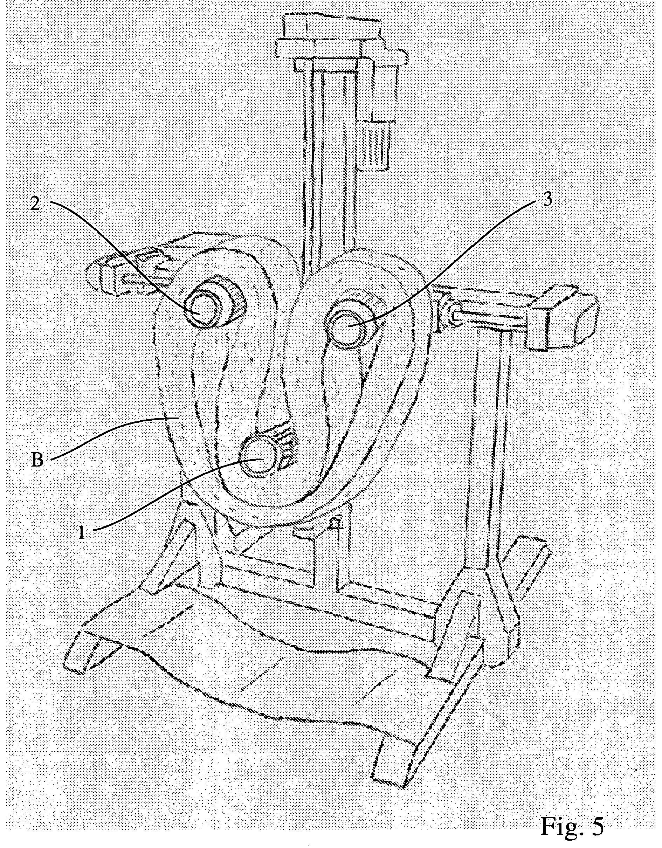

Le montage d'un boudin mousse s'effectue de façon classique en comprimant le boudin à l'aide des rouleaux tel que cela est illustré à la figure 5. Les rouleaux 2 et 3 sont placés au contact de la circonférence interne du boudin et le rouleau 1 est disposé sur la circonférence externe du boudin. Le rouleau 1 est ensuite abaissé de manière à entraîner le boudin entre les rouleaux 2 et 3 et lui faire prendre une forme en U telle qu'illustrée dans le brevet US 1 759 681, ou encore à la figure 5 de la présente demande.

Le pneumatique est alors placé autour du boudin et, en manoeuvrant de façon adéquate les rouleaux, le boudin est libéré dans l'espace intérieur du pneumatique.

Ce procédé est bien connu pour effectuer les opérations de mise en place des chambres de cuisson et s'adapte sans difficultés particulières au montage des boudins mousse en particulier au montage d'ensembles destinés aux véhicules de tourisme dont le diamètre au siège est généralement compris entre 13" et 19".

Des moyens d'introduction équivalents sont également décrits dans les demandes EP 1354 730 ou encore dans la demande W0 95/33628 déposée au nom de la demanderesse. Ces dispositifs n'adressent pas le problème lié au démontage et à l'extraction.

Les moyens décrits dans la demande FR 2 319 503 sont destinés à l'extraction du pneumatique d'une chambre pleine. Toutefois leur utilisation requière une grande attention en ce que l'arrachage du boudin se fait à l'aide d'un élément de traction similaire à une pince dont les efforts de traction sont susceptibles de blesser et de détériorer le boudin.

Toutefois, ces moyens n'ont pas été conçus pour faciliter l'opération de démontage. En effet, les chambres de cuisson sont généralement extraites par des pinces d'arrachement adaptées, après que le vide ait été fait à l'intérieur de ladite chambre, de manière à en réduire les dimensions.

On observera qu'une des particularités du boudin mousse est d'avoir un volume sensiblement constant à la pression atmosphérique

Un procédé de montage et d'extraction des boudins est divulgué à titre d'exemple dans la demande de brevet EP 010 004 A1. Cette publication décrit une machine et un procédé comportant des barres de poussée aptes à éjecter le boudin en exerçant une poussée axiale sur le flanc du boudin.

Ce procédé peut s'avérer particulièrement efficace pour les boudins et les pneumatiques de grande dimension présentant des caractéristiques de rigidité suffisantes pour subir les forces d'arrachement nécessaires, mais s'avère inadapté aux ensembles comportant un boudin mousse relativement élastique, comme cela est le cas pour les véhicules de tourisme.

Par ailleurs, ce procédé présente l'inconvénient de déformer le boudin mousse dans la direction axiale ce qui a pour effet d'introduire de fortes contraintes de torsion dans la semelle du boudin mousse. Ces efforts peuvent nuire à la qualité de la liaison entre le boudin et la semelle, voire provoquer une dégradation de cette liaison.

La présente invention a pour objet de mettre à disposition des utilisateurs de boudins mousse destinés aux véhicules de tourisme un procédé et un outillage permettant d'utiliser la machine employée pour réaliser le montage, du type de celle illustrée à la figure 1, moyennant un mode opératoire particulier et l'utilisation d'un outillage adapté.

Le mode opératoire proposé comprend les étapes suivantes :
- On appuie fortement dans la direction radiale sur la bande de roulement du pneumatique (P) à l'aide d'un moyen apte à poinçonner ladite surface jusqu'à repousser le sommet du boudin mousse radialement à l'intérieur du périmètre délimité par les talons du pneumatique, afin de former un espace (E) entre le sommet du boudin mousse et les talons du pneumatique,
- on introduit dans l'espace (E) un moyen (F), apte à maintenir ledit espace (E) libre d'accès lorsque l'on relâche l'effort appliqué à l'étape précédente, et
- on relâche l'effort appliqué sur la bande de roulement,
- on introduit axialement, un premier rouleau d'axe y₁ y'₁ dans l'espace (E), et un second et un troisième rouleaux, respectivement d'axe y₂ y'₂ et y₃ y'₃, dans l'espace intérieur délimité par le diamètre interne du boudin mousse, les axes y₁ y'₁, y₂ y'₂ et y₃ y'₃ étant parallèles entre eux,
- après avoir extrait le moyen de maintien (F), on déplace le premier rouleau relativement aux second et au troisième rouleaux selon un axe sensiblement situé dans le plan médiateur des deux axes y₂ y'₂ et y₃ y'₃, et perpendiculaire au plan formé par les axes y₂ y'₂ et y₃ y'₃, de manière à entraîner le boudin entre les second et troisième rouleaux (2 et 3) et à lui faire prendre une forme en U,
- on dégage le pneumatique, et on libère le boudin mousse en manoeuvrant les rouleaux (1, 2, 3).

L'outillage F proposé est formé de deux fourches, parallèles entre elles, et solidaires par l'une de leur extrémité à une tête munie d'extrémité formant des poignées.

De cette manière il est possible d'utiliser la même machine pour le montage et le démontage du boudin mousse, en particulier lorsque l'on a affaire à des boudins et des pneumatiques destinés à être utilisés dans les véhicules de tourisme. De plus, ce procédé s'avère relativement simple et l'outillage particulier F, nécessaire à sa mise en oeuvre, est peu onéreux et facile d'utilisation.

Le pliage du boudin s'effectue dans un plan radial ce qui évite tous les efforts de torsion de la semelle et toute dégradation de l'interface entre la semelle et le boudin lors de l'opération d'extraction.

La description qui suit s'appuie sur les figures 1 à 6 permettant d'illustrer les différentes étapes du procédé selon l'invention dans lesquelles,
- la figure 1 représente une vue schématique en perspective d'une machine adaptée au montage des boudins mousses,
- la figure 2 représente une vue schématique de la machine à l'issue de l'étape consistant à introduire l'outillage,
- la figure 3 représente une vue schématique de la machine à l'issue de l'étape consistant à introduire les rouleaux,
- la figure 4 représente une vue schématique de la machine à l'issue de l'étape de mise en U du boudin mousse,
- la figure 5 représente une vue schématique de la machine après avoir dégagé le pneumatique,
- la figure 6 représente une vue schématique de l'outillage destiné à maintenir le boudin en place.

La machine D illustrée à la figure 1 comprend un châssis 5 sur lequel est disposé verticalement un premier axe motorisé ZZ' le long duquel un premier rouleau 1, d'axe horizontale y₁ y'₁, perpendiculaire à l'axe ZZ' se déplace sous l'action d'un moteur électrique 10.

Un second axe motorisé XX', disposé horizontalement et perpendiculaire à l'axe ZZ', supporte un second (2) et un troisième rouleau (3) respectivement d'axes y₂ y'₂ et y₃ y'₃, lesdits axes étant parallèle à l'axe y₁ y'₁,. Les rouleaux 2 et 3 se déplacent le long de l'axe XX' symétriquement par rapport à l'axe ZZ' sous l'action du moteur 20.

Un support galbé 6, disposé au pied du châssis, permet de recevoir un pneumatique dont on souhaite extraire le boudin mousse placé dans son volume intérieur.

Les figures suivantes illustrent les différentes étapes du procédé.

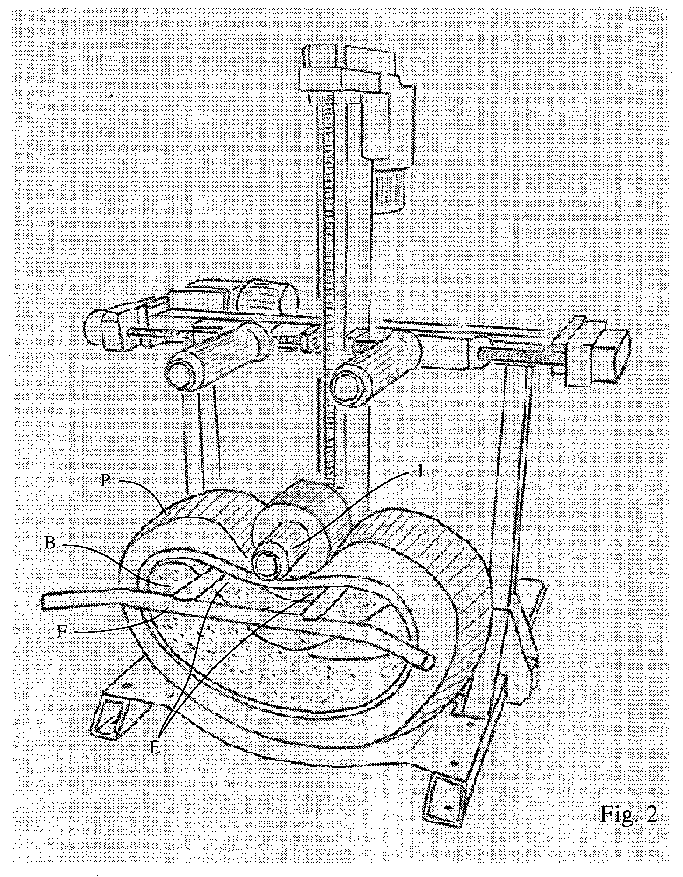

Une première étape consiste à abaisser le rouleau 1 sur la bande de roulement du pneumatique de manière à enfoncer ladite surface par poinçonnement jusqu'à repousser le sommet du boudin mousse radialement à l'intérieur du périmètre délimité par les talons du pneumatique, de manière à former un espace E entre le sommet du boudin mousse et les talons du pneumatique. Cet espace E doit être suffisant pour engager la fourche F, comme cela est illustré à la figure 2.

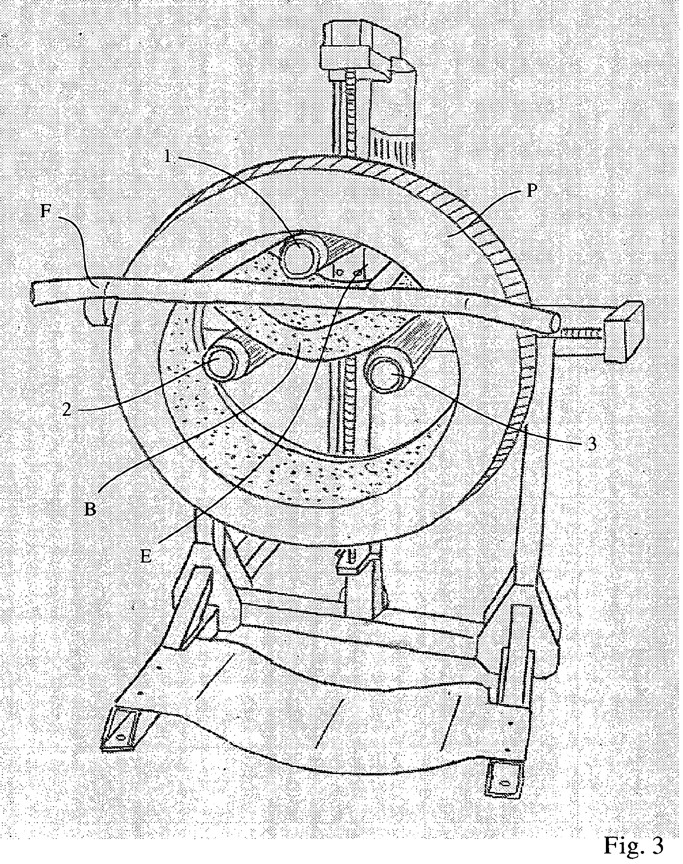

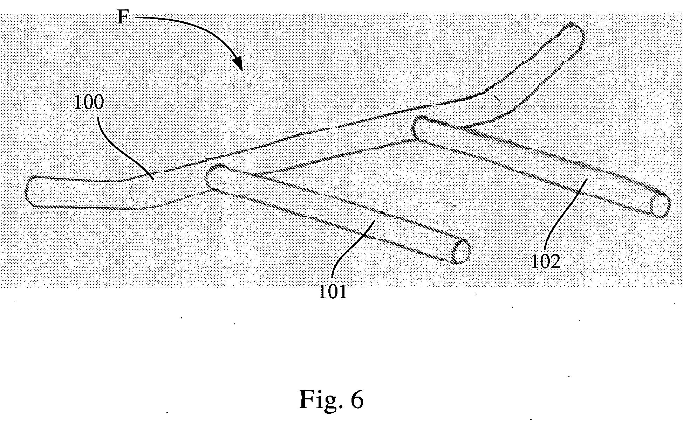

Une fois la fourche engagée entre les talons et le somme du boudin mousse, on relève le rouleau 1 jusqu'à ce que le pneumatique reprenne sensiblement sa forme normale sous l'effet du relâchement des contraintes élastiques. La fourche permet alors de dégager un espace E suffisant pour qu'il soit possible d'introduire le rouleau 1 dans l'espace compris entre les deux branches (101 et 102) de la fourche (voir figure 6), le sommet du boudin, et les talons du pneumatique. On ajuste en conséquence la position du second et du troisième rouleau (2 et 3) de manière à ce que lesdits rouleaux viennent se glisser dans l'espace délimité par le diamètre intérieur du boudin. Comme cela est illustré sur la figure 3.

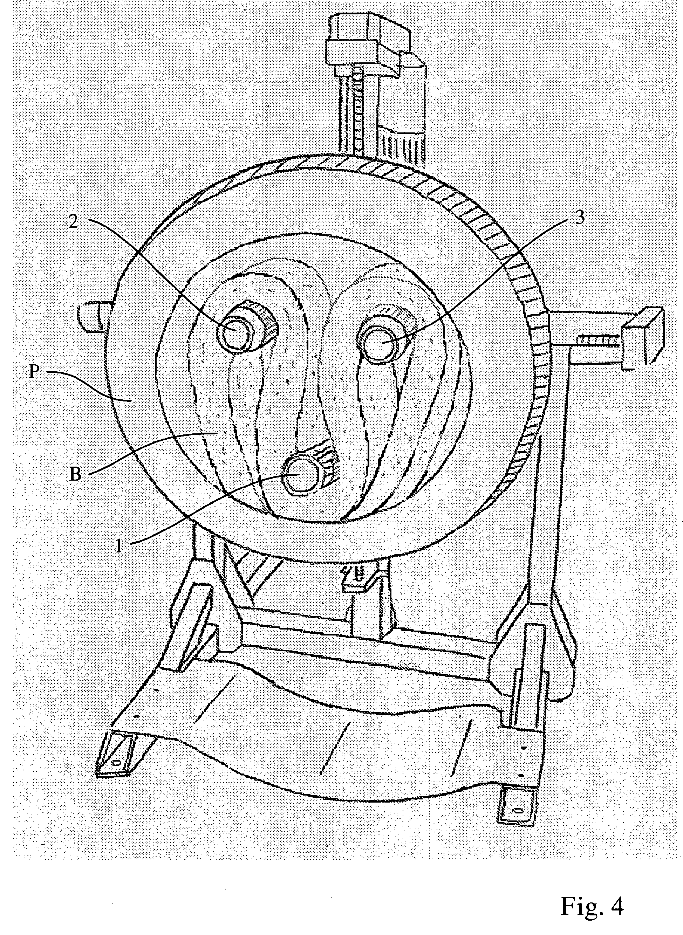

Il est alors possible d'enlever la fourche et d'abaisser le rouleau 1 entre les rouleaux 2 et 3 de manière à entraîner le boudin mousse et lui faire prendre la forme caractéristique en U en jouant sur les propriétés élastiques du boudin comme cela est illustré à la figure 4.

Dans cette configuration il est aisé de désengager les talons inférieurs en basculant de manière adéquate le pneumatique, puis de désengager les talons de la partie supérieure en relevant ledit pneumatique afin de se retrouver dans la configuration telle qu'illustrée à la figure 5.

Il ne reste alors plus qu'à relever le rouleau 1 de manière à libérer le boudin mousse de la machine.

La fourche F, telle qu'illustrée par la figure 6, est formée de deux branches (101 et 102) parallèles entre elles et reliées chacune par une de leur extrémité à une tête de fourche 100. La tête de fourche est formée d'une barre allongée sur laquelle les deux branches 101 et 102 sont soudées perpendiculairement. Les deux extrémités de la tête de fourche sont aménagées pour pouvoir être saisies manuellement par un opérateur afin de faciliter l'introduction et l'extraction de la fourche lors du cycle d'extraction du boudin.

L'écartement entre les deux branches doit être adapté pour que le rouleau 1 puisse se glisser entre les deux branches. En pratique cet écartement est compris entre 20 et 30 cm selon que l'on a affaire à des ensembles de petit ou de grand diamètre.

## Revendications

1. Procédé d'extraction d'un boudin mousse (B) de l'espace intérieur d'un pneumatique (P), dans lequel on appuie fortement dans la direction radiale sur la bande de roulement du pneumatique (P) à l'aide d'un moyen (1) apte à poinçonner ladite surface jusqu'à repousser le sommet du boudin mousse radialement à l'intérieur du périmètre délimité par les talons du pneumatique, afin de former un espace (E) entre le sommet du boudin mousse et les talons du pneumatique, **caractérisé en ce que**
- on introduit dans l'espace (E) un moyen (F), apte à maintenir ledit espace (E) libre d'accès lorsque l'on relâche l'effort appliqué à l'étape précédente, et
- on relâche l'effort appliqué sur la bande de roulement,
- on introduit axialement, un premier rouleau (1) d'axe y₁ y'₁ dans l'espace (E), et un second et un troisième rouleaux (2 et 3), respectivement d'axe y₂ y'₂ et y₃ y'₃, dans l'espace intérieur délimité par le diamètre interne du boudin mousse, les axes y₁ y'₁, y₂ y'₂ et y₃ y'₃ étant parallèles entre eux,
- après avoir extrait le moyen de maintien (F), on déplace le premier rouleau (1) relativement au second et au troisième rouleaux (2 et 3) selon un axe sensiblement situé dans le plan médiateur aux deux axes y₂ y'₂ et y₃ y'₃, et perpendiculaire au plan formé par les axes y₂ y'₂ et y₃ y'₃, de manière à entraîner le boudin entre les second et troisième rouleaux (2 et 3) et à lui faire prendre une forme en U,
- on dégage le pneumatique, et on libère le boudin mousse en manoeuvrant les rouleaux (1, 2, 3).

2. Méthode selon la revendication 1, dans laquelle les rouleaux (1, 2, 3) sont montés sur un châssis (5) comportant des moyens aptes à déplacer le premier rouleau 1 le long d'un premier axe ZZ', et à déplacer les second et troisième rouleau, de manière symétrique par rapport à l'axe ZZ', selon un axe XX' perpendiculaire à l'axe ZZ'.

3. Méthode selon la revendication 1 ou 2 dans laquelle on appuie fortement sur la bande de roulement du pneumatique (P) en manoeuvrant de manière appropriée le premier rouleau (1).

4. Méthode selon l'une des revendications 1 à 3, dans laquelle le moyen de maintien (F) est formé de deux branches (101, 102), parallèles entre elles, et solidaires par l'une de leur extrémité à une tête de fourche (100).

5. Méthode selon la revendication 4 dans laquelle l'espacement entre les fourches (101, 102) est adapté pour permettre d'introduire axialement le premier rouleau entre les deux fourches lors de l'introduction du premier rouleau (1) dans l'espace (E) libéré entre le sommet du boudin mousse et les talons du pneumatique.

## Claims

1. Method for extracting a foam support ring (B) from the interior space of a tyre (P), in which method the tread strip of the tyre (P) is pressed firmly in the radial direction using a means (1) able to punch the said surface until the top of the foam support ring is pushed radially inside the perimeter defined by the beads of the tyre so as to form a space (E) between the top of the foam support ring and the beads of the tyre, the method being
**characterized in that**
- a means (F) able to keep the space (E) clear for access when the force applied in the previous step is released is introduced into the said space (E), and
- the force applied to the tread strip is released,
- a first roller (1) of axis y₁y'₁ is introduced axially into the space (E), and a second and third roller (2 and 3) of axes y₂y'₂ and y₃y'₃ respectively are introduced into the interior space defined by the internal diameter of the foam support ring, the axes y₁y'₁, y₂y'₂ and y₃y'₃ being mutually parallel,
- once the holding means (F) has been extracted, the first roller (1) is moved relative to the second and to the third rollers (2 and 3) along an axis situated substantially in the plane mid-way between the two axes y₂y'₂ and y₃y'₃ and perpendicular to the plane formed by the axes y₂y'₂ and y₃y'₃ so as to drive the support ring between the second and third rollers (2 and 3) and cause it to adopt a U shape,
- the tyre is disengaged and the foam support ring is released by manoeuvring the rollers (1, 2, 3).

2. Method according to Claim 1, in which the rollers (1, 2, 3) are mounted on a chassis (5) comprising means able to move the first roller 1 along a first axis ZZ' and to move the second and third rollers, symmetrically relative to the axis ZZ', along an axis XX' perpendicular to the axis ZZ'.

3. Method according to Claim 1 or 2 in which the tread strip of the tyre (P) is pressed firmly by manoeuvring the first roller (1) appropriately.

4. Method according to one of Claims 1 to 3, in which the holding means (F) is formed of two mutually parallel branches (101, 102) connected to a fork head (100) at one of their ends.

5. Method according to Claim 4 in which the spacing between the forks (101, 102) is designed to allow the first roller to be introduced axially between the two forks when the first roller (1) is introduced into the space (E) freed between the top of the foam support ring and the beads of the tyre.

## Patentansprüche

1. Verfahren zum Entfernen eines Schaumstoffwulsts (B) aus dem Innenraum eines Luftreifens (P), bei dem mit Hilfe eines Mittels (1) stark in radialer Richtung auf die Lauffläche des Luftreifens (P) gedrückt wird, das fähig ist, die Fläche einzudrücken, bis der Scheitel des Schaumstoffwulsts radial ins Innere des von den Reifenwülsten des Luftreifens begrenzten Umfangs zurückgedrückt wird, um einen Raum (E) zwischen dem Scheitel des Schaumstoffwulsts und den Reifenwülsten des Luftreifens (P) zu bilden,
**dadurch gekennzeichnet, dass**
- in den Raum (E) ein Mittel (F) eingeführt wird, das fähig ist, den Zugang zum Raum (E) frei zu halten, wenn die im vorhergehenden Schritt angewendete Kraft beendet wird, und
- die auf die Lauffläche angewendete Kraft beendet wird,
- axial eine erste Rolle (1) mit einer Achse y₁ y'₁ in den Raum (E) eingeführt wird, und eine zweite und eine dritte Rolle (2 und 3) mit einer Achse y₂ y'₂ bzw. y₃ y'₃ in den vom Innendurchmesser des Schaumstoffwulsts begrenzten Innenraum eingeführt werden, wobei die Achsen y₁ y'₁, y₂ y'₂, y₃ y'₃ zueinander parallel sind,
- nach der Entnahme des Haltemittels (F) die erste Rolle (1) bezüglich der zweiten und der dritten Rolle (2 und 3) gemäß einer Achse verschoben wird, die sich im Wesentlichen in der Mittelebene zwischen den zwei Achsen y₂ y'₂ und y₃ y'₃ und lotrecht zu der von den Achsen y₂ y'₂ und y₃ y'₃ gebildeten Ebene befindet, um den Wulst zwischen der zweiten und der dritten Rolle (2 und 3) anzutreiben und ihm eine U-Form zu verleihen,
- der Luftreifen gelöst und der Schaumstoffwulst freigesetzt wird, indem die Rollen (1, 2, 3) betätigt werden.

2. Verfahren nach Anspruch 1, bei dem die Rollen (1, 2, 3) auf ein Gestell (5) montiert sind, das Mittel aufweist, die fähig sind, die erste Rolle 1 entlang einer ersten Achse ZZ' zu verschieben und die zweite und die dritte Rolle symmetrisch zur Achse ZZ' gemäß einer Achse XX' lotrecht zur Achse ZZ' zu verschieben.

3. Verfahren nach Anspruch 1 oder 2, bei dem stark auf die Lauffläche des Luftreifens (P) gedrückt wird, indem die erste Rolle (1) in geeigneter Weise betätigt wird.

4. Verfahren nach einem der Ansprüche 1 bis 3, bei dem das Haltemittel (F) von zwei zueinander parallelen und an einem ihrer Enden fest mit einem Gabelkopf (100) verbundenen Armen (101, 102) gebildet wird.

5. Verfahren nach Anspruch 4, bei dem der Abstand zwischen den Gabeln (101, 102) geeignet ist, um axial das Einführen der ersten Rolle zwischen die zwei Gabeln bei der Einführung der ersten Rolle (1) in den Raum (E) zu erlauben, der zwischen dem Scheitel des Schaumstoffwulsts und den Reifenwülsten des Luftreifens freigesetzt wird.
